# EUROPEAN PATENT APPLICATION

(11) **EP 2 662 607 A1**
(43) Date of publication of application: **13.11.2013**
(21) Application number: 12460021.4
(22) Date of filing: 11.05.2012
(51) Int. Cl.: F16L 59/00

(54) **Casing pipe for pre-insulated products**

(71) Applicant: Zaklad Produkcyjno Uslugowy Miedzyrzecz Polskie Rury Preizolowane SP. Z O.O., 66-300 Miedzyrzecz (PL)
(72) Inventor: Górczynski, Dariusz, 66-300 Miedzyrzecz (PL); Górczynski, Henryk, 66-300 Miedzyrzecz (PL)
(74) Representative: Kujanek, Wlodzimierz

(57) **Abstract**

This invention relates to a polyethylene casing pipe containing a layer of ethylene vinyl alcohol copolymer EVOH constituting the inner coating of the casing pipe. The coating of ethylene vinyl alcohol copolymer EVOH has a thickness of at least 140 µm.

## Description

The present invention relates to a casing pipe for pre-insulated products, especially for heat pipelines.

The pre-insulated pipe, known from the application WO 2004/003423, containing one or more inner pipes transporting gas or liquid, and the insulating foam, preferably from polyurethane (PUR) surrounding the inner pipe, and an optional durable outer casing, such as from polyethylene surrounding the foam and inner pipe. The diffusion regulating layer is applied onto the exterior of PUR foam insulation or on the outside of the outer casing.

The pre-insulated pipe, known from the application EP 2340929, consisting of a steel carrier pipe, the outer pipe of plastic serving as a mechanical protective jacket and an insulating material filling the annular space between the carrier pipe and the outer pipe, used as thermal insulation. The outer pipe is formed as a composite pipe and possesses a gas diffusion barrier in its interior, integrated in the outer pipe, made from ethylene vinyl alcohol copolymer (EVOH) surrounded by at least one layer with a binder. The thickness of the barrier layer is from 80 µm to 120 µm.

In the prior art pre-insulated pipes the space between the inner pipe and outer pipe is filled with polyurethane foam PUR to ensure the transfer of the stresses resulting from thermal operation of the pipeline to ground. Polyurethane foam constituting the insulation must show not only the adhesion to the utility carrying pipe, but also and above all the adhesion to the polyethylene casing from the inside. Without meetig the ability to transfer the normatively defined minimum shear forces the preinsulated heat pipeline subjects to damage in a short time.

Commonly used modification of internal surfaces by electrical corona discharges, called high voltage discharge treatment, to ensure effective adhesion of polyurethane foam to polyethylene casing has two very serious drawbacks. The adhesion capability originally given to the casing pipes during the production process decreases with time as a result of storage. The second drawback of the high voltage discharge treatment is that it is not possible to activate the entire length of the circuit in a given cross section from the inside by this method.

The casing pipe for pre-insulated products made of PE containing a layer of ethylene vinyl alcohol copolymer EVOH is free from those disadvantages, in which, according to the invention, a layer of ethylene vinyl alcohol copolymer EVOH forms the inner coating.

The layer of ethylene vinyl alcohol copolymer EVOH constituting the inner coating of the casing pipe has a thickness of at least 140 µm.

Polyurethane foam (PUR) is injected into the interior of the casing pipe, made according to the invention, during the production of pre-insulated products.

The coating of ethylene vinyl alcohol copolymer EVOH with a thickness of at least 140 µm provides a very strong connection with the insulation layer made based on polyurethane (PUR). The effectiveness of this connecton persists on a constant and necessary level for the whole foreseeable 30-year's normative period of the preinsulated heat pipeline service life.

Fitting the casing pipe of PE with a layer of ethylene vinyl alcohol copolymer EVOH, forming its inner coating, does not affect the ability to perform butt welding, electrofusion and performance of extruderation pointing in any way. These processes are necessary for the implementation of the pre-insulation technology of both straight sections and fittings, valves, expansion joints as well as making the joint units during laying heat pipelines.

The example of the preinsulated product execution using the casing pipe of the invention.

The casing pipe made of polyethylene (PE) is fitted by coextrusion with a layer of ethylene vinyl alcohol copolymer EVOH, permanantly bound with it from the inside, with a thickness of 150 µm.

The pipe sections of the casing pipe so produced are put on the tee pipe carrying component, then they are connected by butt welding and extruderation pointing. Then the space between the carrying pipe and the casing pipe is filled with a thermally insulating polyurethane foam (PUR), which binds to a casing pipe strongly.

The pipeline made from the pre-insulated components in the casing pipe of polyethylene (PE) with a layer of ethylene vinyl alcohol copolymer EVOH is used to pre-insulation of both straight pipe sections and all fittings with valves, which are used to mount the heat pipelines.

The pipeline made from the preinsulated components in the casing pipe of polyethylene (PE) with a layer of ethylene vinyl alcohol copolymer EVOH from the inside transfers the mechanical stresses caused by thermal expansion of the carrying pipe to ground very efficiently. This is ensured by a powerful fusion of PUR insulation foam with both the carrying pipe and the casing pipe of PE.

## Claims

1. The casing pipe for production of pre-insulated products made of polyethylene, containing a layer of ethylene vinyl alcohol copolymer EVOH **characterized in that** the layer of ethylene vinyl alcohol copolymer EVOH constitutes the internal coating of the casing pipe.

2. The casing pipe according to claim 1, **characterized in that** a layer of ethylene vinyl alcohol copolymer EVOH constituting the inner coating of the casing pipe has a thickness of at least 140 µm.
